# EUROPÄISCHE PATENTSCHRIFT

(11) **EP 2 531 750 B1**
(45) Veröffentlichungstag und Bekanntmachung des Hinweises auf die Patenterteilung: **24.06.2015**
(21) Anmeldenummer: 10784729.5
(22) Anmeldetag: 09.11.2010
(51) Int. Cl.: F16J 9/06, F16J 15/32, F16J 9/20

(54) **ÖLABSTREIF-KOLBENRING**
OIL CONTROL RING
SEGMENT DE PISTON RACLEUR D'HUILE

(30) Priorität: 01.02.2010 DE 102010001434
(43) Veröffentlichungstag der Anmeldung: 12.12.2012
(73) Patentinhaber: Federal-Mogul Burscheid GmbH, 51399 Burscheid (DE)
(72) Erfinder: ESSER, Peter, 51515 Kürten (DE)
(74) Vertreter: Becker Kurig Straus
(86) Internationale Anmeldenummer: PCT/EP2010/067074
(87) Internationale Veröffentlichungsnummer: WO 2011/091876

(56) Entgegenhaltungen:
- EP-A1- 1 936 245
- DE-B- 1 065 235
- GB-A- 652 143
- US-A- 2 640 746
- US-A- 2 715 556

## Beschreibung

Die vorliegende Erfindung betrifft einen Ölabstreifring für den Kolben einer Verbrennungskraftmaschine. Insbesondere betrifft sie einen Ölabstreifring mit verbesserter Ölabstreifung und verbessertem Verschleißverhalten.

Ölabstreifringe dienen bei Verbrennungskraftmaschinen dazu, den Ölverbrauch der Verbrennungskraftmaschine zu minimieren und gleichzeitig eine ausreichende Schmierung zwischen Kolben und Zylinderwand zu gewährleisten. Dazu muss der Ölabstreifring zwei Eigenschaften aufweisen, zwischen denen ein Kompromiss zu finden ist. Einerseits muss er bei der Abwärtsbewegung des Kolbens, d.h. in Richtung des Ölraums, möglichst viel Öl von der Zylinderwand abstreifen, um den Ölverbrauch zu minimieren. Andererseits muss zu jeder Zeit ein minimaler Ölfilm zwischen dem Ölabstreifring und der Zylinderwand aufrechterhalten werden, um die Reibung und somit den Verschleiß niedrig zu halten.

Der gefundene Kompromiss soll dabei über lange Betriebszeiträume des Motors aufrechterhalten bleiben. Dazu muss der Verschleiß am Ölabstreifring gering gehalten werden, da sich ansonsten der Spalt zwischen Ölabstreifring und Zylinderwand vergrößert und der Ölverbrauch steigt.

Bekannt sind derzeit lediglich Ölabstreifringe mit vollbeschichteten Laufstegen (so genannte Mono-Beschichttung).

Einer Ölabstreifring gemäß dem Oberbegriff des Anspruchs 1 ist aus dem US 2 715 556 bekannt.

Der Erfindung liegt daher die Aufgabe zugrunde, einen verbesserten Ölabstreifring bereitzustellen. Der Versatz der beiden Abstreiflippen entspricht der Beschichtungsdicke. Durch die Anordnung der Abstreiflippen axial und radial ergibt sich eine Verdreifachung der Lebensdauer. Durch die Anpassung der Flankenwinkel der Abstreiflippen ist eine homogene Abscheidung der PVD oder DLC-Schicht gegeben.

Gemäß einem Aspekt der Erfindung wird ein Ölabstreif-Kolbenring bereitgestellt, umfassend
- einen Ringkörper;
- zwei radial äußere Laufstege auf dem Ringkörper, die in Bezug auf die Laufrichtung des Kolbens hintereinander angeordnet und durch eine äußere Vertiefung voneinander beabstandet sind;
- wobei jeder Laufsteg jeweils zwei Abstreiflippen aufweist; und
- eine Verschleißschutzbeschichtung auf jeder Abstreiflippe.

Die gewünschten Konturen in den Laufstegen, d.h. vor allem die Abstreiflippen, können durch mechanische Bearbeitung der Stege oder spezielle Ziehprozesse bei Stahlprofilen in die Stege eingebracht werden.

Die Breite des Ringkörpers in Laufrichtung beträgt bevorzugt zwischen 1,5 und 3 mm.

Die Laufstege sind bevorzugt um etwa 0,6 mm voneinander beabstandet und weisen eine radiale Höhe von bevorzugt 0,2 bis 0,7 mm, besonders bevorzugt 0,45 mm auf (entsprechend der radialen Höhe der Vertiefung).

Die radiale Höhe der Abstreiflippen beträgt bevorzugt etwa 0,082 mm. Die Breite der Lauffläche der Abstreiflippen in Laufrichtung beträgt bevorzugt zwischen 0,01 bis 0,2 mm, besonders bevorzugt 0,05 mm.

Die Schichtdicke der Verschleißschutzbeschichtung liegt bevorzugt zwischen 1 und 30 µm.

Gemäß einer Ausführungsform weisen alle Abstreiflippen im Wesentlichen die gleiche radiale Höhe auf.

Gemäß einer Ausführungsform weist die brennraumseitige Abstreiflippe von mindestens einem Laufsteg eine größere radiale Höhe auf als die ölraumseitige Abstreiflippe des Laufstegs.

In dieser Ausführungsform ist mindestens eine ölraumseitige Abstreiflippe gegenüber der brennraumseitigen Abstreiflippe radial zurückversetzt.

Gemäß einer Ausführungsform ist die mindestens eine radial höhere Abstreiflippe die brennraumseitige Abstreiflippe des brennraumseitigen Laufstegs.

Die radial höhere Abstreiflippe ist bevorzugt diejenige des brennraumseitigen Laufstegs.

Gemäß einer Ausführungsform weist die brennraumseitige Abstreiflippe jedes Laufstegs eine größere radiale Höhe auf als die ölraumseitige Abstreiflippe des Laufstegs.

Gemäß einer Ausführungsform entspricht der radiale Höhenunterschied im Wesentlichen der Dicke der Verschleißschutzbeschichtung der Abstreiflippen entspricht.

D.h. die radial niedrigere ölraumseitige Abstreiflippe ist um etwa die Beschichtungsdicke der Verschleißschutzschicht gegenüber der radial höheren brennraumseitigen Abstreiflippe zurückversetzt.

Gemäß einer Ausführungsform verläuft die Verschleißschutzbeschichtung der Abstreiflippen in dem Bereich zwischen den Abstreiflippen ununterbrochen.

Gemäß einer Ausführungsform verjüngen sich die Abstreiflippen nach außen hin.

Diese kann beispielsweise durch eine im Wesentlichen konische Form der Abstreiflippen erreicht werden.

Gemäß einer Ausführungsform ist die brennraumseitige Flanke jeder Abstreiflippe in Bezug auf die Laufrichtung steiler als die jeweilige ölraumseitige Flanke.

Gemäß einer Ausführungsform ist die ölraumseitige Flanke der brennraumseitigen Abstreiflippe eines Laufstegs oder aller Laufstege in Bezug auf die Laufrichtung steiler als die ölraumseitige Flanke der ölraumseitigen Abstreiflippe des jeweiligen Laufstegs.

Gemäß einer Ausführungsform ist die äußere Vertiefung zwischen den Laufstegen tiefer als der Bereich zwischen den Abstreiflippen.

Gemäß einer Ausführungsform ist die Verschleißschutz-Beschichtung zwischen den Abstreiflippen radial mindestens so hoch wie die Abstreiflippen.

Dadurch wird erreicht, dass bei Verschleiß der Verschleißschutzbeschichtung bis zu den Laufflächen der Abstreiflippen herunter ein vollgekammerter Ringsteg mit selbstschärfenden Ecken entsteht. Zwischen den Abstreiflippen verbleibt dann der Rest der Verschleißschutzbeschichtung.

Gemäß einer Ausführungsform sind die Innenflanken der Laufstege in Bezug auf die Laufrichtung steiler als die Außenflanken.

Gemäß einer Ausführungsform ist die Innenflanke des ölraumseitigen Laufstegs in Bezug auf die Laufrichtung steiler als die Innenflanke des brennraumseitigen Laufstegs.

Gemäß einem weiteren Aspekt der Erfindung wird ein Kolben für eine Verbrennungskraftmaschine bereitgestellt, umfassend mindestens einen vorstehend beschriebenen Ölabstreif-Kolbenring.

### Kurze Beschreibung der Zeichnung

- Fig. 1: zeigt im Querschnitt eine Ausführungsform eines erfindungsgemäßen ÖlabstreifKolbenrings;
- Fig. 2: zeigt in einer Querschnittsansicht die Steilheit verschiedener Abstreiflippen der Ausführungsform von Fig. 1;

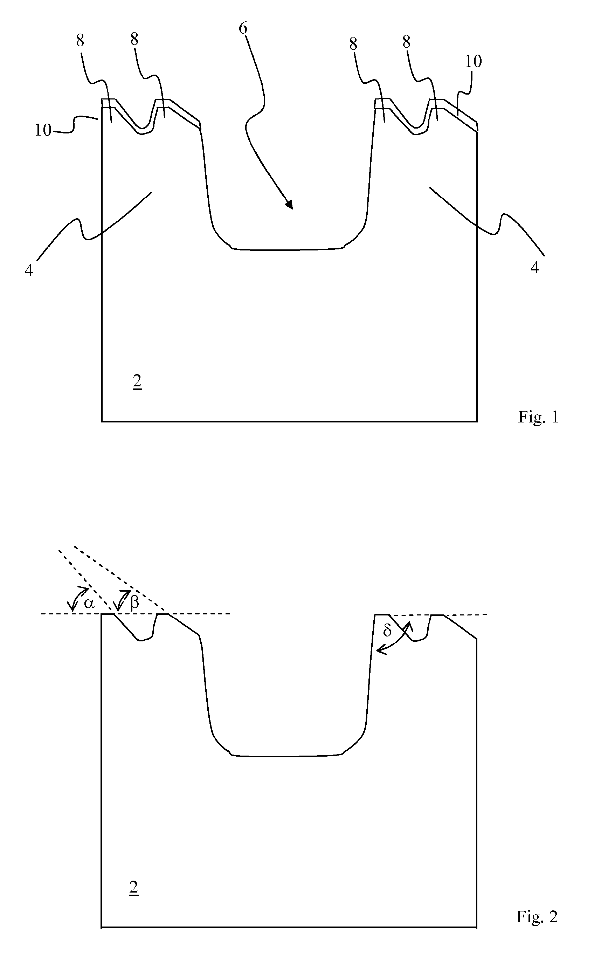

- Fig. 2: zeigt in einer Querschnittsansicht Abmessungen der Ausführungsform von Fig. 1;

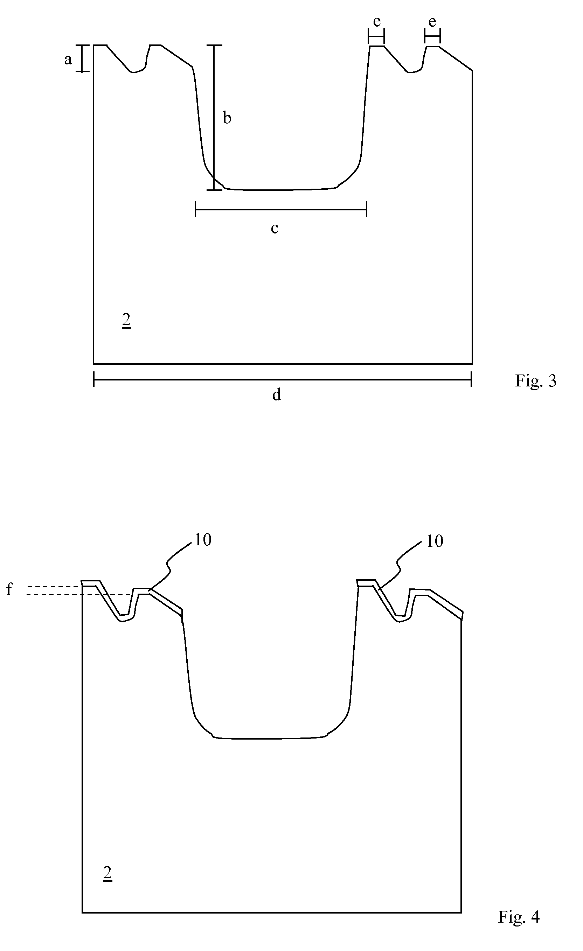

- Fig. 4: zeigt im Querschnitt eine alternative Ausführungsform eines erfindungsgemäßen Ölabstreif-Kolbenrings;

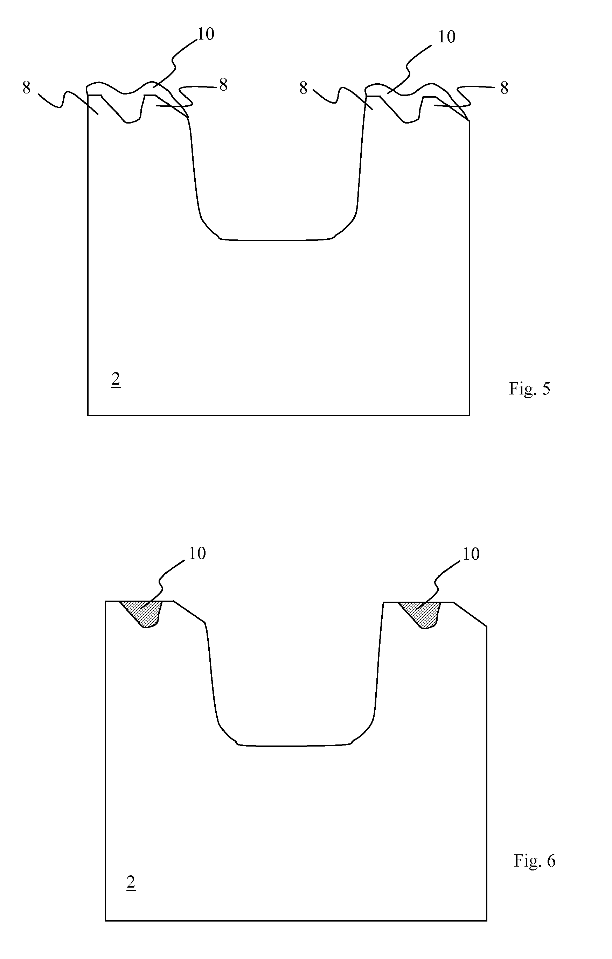

- Fig. 5: zeigt im Querschnitt eine weitere alternative Ausführungsform eines erfindungsgemäßen Ölabstreif-Kolbenrings; und
- Fig. 6: zeigt im Querschnitt die Ausführungsform von Fig. 4 nach Verschleiß aller Abstreiflippen.

### Detaillierte Beschreibung

Fig. 1 zeigt im Querschnitt eine erste Ausführungsform des erfindungsgemäßen Ölabstreif-Kolbenrings. In dieser und den weiteren Figuren ist die Zylinderwandseite des Ölabstreifrings oben, die Kolbenseite unten, die Brennraumseite links und die Ölraum- bzw. Kurbelgehäuseseite rechts. Der Ölabstreifring umfasst einen Ringkörper 2, der flankenseitig mit je einem Laufsteg 4 versehen ist. Die Laufstege 4 müssen nicht notwendigerweise direkt an den Flanken des Ringkörpers 2 angeordnet sein, sondern können auch nach innen versetzt sein.

Die Laufstege 4 sind durch eine äußere Vertiefung 6 voneinander beabstandet. Auf den Laufstegen 4 befinden sich je zwei Abstreiflippen 8. Die Abstreiflippen 8 sind mit einer Verschleißschutzbeschichtung 10 versehen. Die Vertiefung 6 ist deutlich tiefer als der Bereich zwischen den Abstreiflippen 8. Durch die Erhöhung der Zahl der Abstreiflippen auf vier wird eine verbesserte Abstreifwirkung erzielt.

Die Beschichtung kann Chrom (Cr) oder diamant-ähnlichen Kohlenstoff (diamond-like carbon, DLC) enthalten. Sie kann beispielsweise mittels physikalischer Abscheidung aus der Gasphase (physical vapor deposition, PVD) aufgebracht werden.

In Fig. 2 sind die Steilheiten der Abstreiflippen und Laufstege bei einer Ausführungsform wie in Fig. 1 gezeigt. Der besseren Übersicht wegen ist hier die Beschichtung aber nicht dargestellt.

Wie in Fig. 2 zu ersehen ist die ölraumseitige Flanke der brennraumseitigen Abstreiflippe steiler als die ölraumseitige Flanke der ölraumseitigen Abstreiflippe (hier beispielhaft nur für den linken Laufsteg dargestellt, der andere Laufsteg kann aber die gleichen Steilheitsverhältnisse aufweisen).

Alle im Folgenden genannten Winkel entsprechen jeweils dem Winkel bezüglich der Laufrichtung des Ölabstreifrings, der kleiner gleich 90° ist.

Beispielhafte Werte für die Steilheit α der ölraumseitigen Flanke der brennraumseitigen Abstreiflippe schließen 25-50° ein, besonders bevorzugt 40°. Beispielhafte Werte für die Steilheit β der ölraumseitigen Flanke der ölraumseitigen Abstreiflippe schließen 15-40° ein, besonders bevorzugt 30°.

Die Steilheit δ der inneren Flanke des ölraumseitigen Laufstegs liegt bevorzugt zwischen 89 und 80° (1-10° senkrecht zur Laufrichtung), besonders bevorzugt 82,4° (7,6° senkrecht zur Laufrichtung). Die innere Flanke des brennraumseitigen Laufstegs liegt bevorzugt zwischen 89 und 80°, besonders bevorzugt 83,7°. Die Steilheiten der inneren Flanken der Laufstege können gleich sein, bevorzugt ist aber die Steilheit der Innenflanke des ölraumseitigen Laufstegs größer.

In Fig. 3 sind verschiedene Abmessungen bei einer Ausführungsform wie in Fig. 1 gezeigt. Der besseren Übersicht wegen ist hier die Beschichtung aber nicht dargestellt.

Die Breite d des Ringkörpers in Laufrichtung liegt bevorzugt zwischen 1,5 und 3 mm. Die radiale Höhe der *b* Vertiefung bzw. radiale Höhe der Laufstege liegt bevorzugt zwischen 0,2 und 0,7 mm, besonders bevorzugt bei 0,45 mm. Die Breite c der Vertiefung liegt bevorzugt bei 0,6 mm.

Die radiale Höhe *a* der Abstreiflippen beträgt bevorzugt 0,082 mm. Die Breite *e* der Lauffläche der Abstreiflippen in Laufrichtung liegt bevorzugt zwischen 0,01 und 0,2 mm, bevorzugt bei 0,05 mm.

In Fig. 4 ist eine Ausführungsform gezeigt, die ansonsten ähnlich der von Fig. 1 ist. Hier ist das optionale Merkmal gezeigt, dass die radiale Höhe der jeweiligen ölraumseitigen Abstreiflippen jedes Laufstegs um die Beschichtungsdicke f der Verschleißschutzbeschichtung verringert ist. Mit anderen Worten, die ölraumseitigen Abstreiflippen sind um die Beschichtungsdicke f zurückgesetzt. Die Beschichtungsdicke f liegt bevorzugt im Bereich von 1 bis 30 µm.

In Fig. 5 ist eine weitere alternative Ausführungsform gezeigt, die ansonsten ähnlich der von Fig. 1 ist. Hier ist das optionale Merkmal gezeigt, dass die Verschleißschutzbeschichtung 10 im Bereich zwischen den Abstreiflippen 8 radial mindestens so hoch ist wie die Abstreiflippen 8.

In Fig. 6 ist der Zustand der Ausführungsform von Fig. 5 gezeigt, nachdem die Verschleißschutzbeschichtung 10 bis auf die Abstreiflippen 8 herunter abgenutzt ist. In diesem Fall geht bei dieser Ausführungsform der Ölabstreifring in eine vollgekammerte Stegversion über. Dabei entsteht eine zusätzliche Verschleißschicht, die selbstschärfende Stegecken aufweist.

## Patentansprüche

1. Ölabstreif-Kolbenring, umfassend
- einen Ringkörper (2);
- zwei radial äußere Laufstege (4) auf dem Ringkörper (2), die in Bezug auf die Laufrichtung des Kolbens hintereinander angeordnet und durch eine äußere Vertiefung (6) voneinander beabstandet sind;
- wobei jeder Laufsteg (4) jeweils zwei Abstreiflippen (8) aufweist; und **gekennzeichnet durch**
- eine Verschleißschutz-Beschichtung (10) auf jeder Abstreiflippe (8).

2. Ölabstreif-Kolbenring nach Anspruch 1, wobei alle Abstreiflippen (8) im Wesentlichen die gleiche radiale Höhe aufweisen.

3. Ölabstreif-Kolbenring nach Anspruch 1, wobei die brennraumseitige Abstreiflippe (8) von mindestens einem Laufsteg (4) eine größere radiale Höhe aufweist als die ölraumseitige Abstreiflippe (8) des Laufstegs (4).

4. Ölabstreif-Kolbenring nach Anspruch 3, wobei die mindestens eine radial höhere Abstreiflippe (8) die brennraumseitige Abstreiflippe (8) des brennraumseitigen Laufstegs (4) ist.

5. Ölabstreif-Kolbenring nach Anspruch 3 oder 4, wobei die brennraumseitige Abstreiflippe (8) jedes Laufstegs (4) eine größere radiale Höhe aufweist als die ölraumseitige Abstreiflippe (8) des Laufstegs (4).

6. Ölabstreif-Kolbenring nach einem der Ansprüche 3 bis 5, wobei der radiale Höhenunterschied im Wesentlichen der Beschichtungsdicke der Abstreiflippen (8) entspricht.

7. Ölabstreif-Kolbenring nach einem der vorhergehenden Ansprüche, wobei die Verschleißschutzbeschichtung (10) der Abstreiflippen (8) in dem Bereich zwischen den Abstreiflippen (8) ununterbrochen verläuft.

8. Ölabstreif-Kolbenring nach einem der vorhergehenden Ansprüche, wobei die Abstreiflippen (8) sich radial nach außen verjüngen.

9. Ölabstreif-Kolbenring nach Anspruch 8, wobei die brennraumseitige Flanke jeder Abstreiflippe (8) in Bezug auf die Laufrichtung steiler ist als die ölraumseitige Flanke.

10. Ölabstreif-Kolbenring nach Anspruch 8, wobei die dem Brennraum abgewandte Flanke der brennraumseitigen Abstreiflippe (8) eines Laufstegs (4) in Bezug auf die Laufrichtung steiler ist als die ölraumseitige Flanke der ölraumseitigen Abstreiflippe (8) des Laufstegs (4).

11. Ölabstreif-Kolbenring nach einem der vorhergehenden Ansprüche, wobei die äußere Vertiefung (6) zwischen den Laufstegen (4) tiefer ist als der Bereich zwischen den Abstreiflippen (8).

12. Ölabstreif-Kolbenring nach einem der vorhergehenden Ansprüche, wobei die Verschleißschutz-Beschichtung (10) zwischen den Abstreiflippen (8) radial mindestens so hoch ist wie die Abstreiflippen (8).

13. Ölabstreif-Kolbenring nach einem der vorhergehenden Ansprüche, wobei die Außenflanken der Laufstege (4) in Bezug auf die Laufrichtung steiler sind als die Innenflanken.

14. Ölabstreif-Kolbenring nach einem der vorhergehenden Ansprüche, wobei die Innenflanke des ölraumseitigen Laufstegs (4) in Bezug auf die Laufrichtung steiler ist als die Innenflanke des brennraumseitigen Laufstegs (4).

15. Kolben für eine Verbrennungskraftmaschine, umfassend mindestens einen ÖlabstreifKolbenring nach einem der Ansprüche 1 bis 14.

## Claims

1. An oil scraper piston ring, comprising
- a ring body (2);
- two radial outer running webs (4) on the ring body (2), which are arranged one behind the other in relation to the run direction of the piston and are spaced apart from one another by an external depression (6);
- wherein each running web (4) respectively has two scraper lips (8); and
**characterized by**
- a wear protection coating (10) on each scraper lip (8).

2. The oil scraper piston ring according to claim 1, wherein all scraper lips (8) have substantially the same radial height.

3. The oil scraper piston ring according to claim 1, wherein the combustion-chamber-side scraper lip (8) of at least one running web (4) has a greater radial height than the oil-chamber-side scraper lip (8) of the running web (4).

4. The oil scraper piston ring according to claim 3, wherein the at least one radially taller scraper lip (8) is the combustion-chamber-side scraper lip (8) of the combustion-chamber-side running web (4).

5. The oil scraper piston ring according to claim 3 or 4, wherein the combustion-chamber-side scraper lip (8) of each running web (4) has a greater radial height than the oil-chamber-side scraper lip (8) of the running web (4).

6. The oil scraper piston ring according to one of claims 3 to 5, wherein the radial height difference substantially corresponds to the coating thickness of the scraper lips (8).

7. The oil scraper piston ring according to one of the preceding claims, wherein the wear protection coating (10) of the scraper lips (8) extends uninterrupted in the region between the scraper lips (8).

8. The oil scraper piston ring according to one of the preceding claims, wherein the scraper lips (8) taper radially outward.

9. The oil scraper piston ring according to claim 8, wherein the combustion-chamber-side flank of each scraper lip (8) is steeper in relation to the run direction than the oil-chamber-side flank.

10. The oil scraper piston ring according to claim 8, wherein the flank of the combustion-chamber-side scraper lip (8) of one running web (4) facing away from the combustion chamber is steeper in relation to the run direction than the oil-chamber-side flank of the oil-chamber-side scraper lip (8) of the running web (4).

11. The oil scraper piston ring according to one of the preceding claims, wherein the outer depression (6) between the running webs (4) is deeper than the region between the scraper lips (8).

12. The oil scraper piston ring according to one of the preceding claims, wherein the wear protection coating (10) between the scraper lips (8) is radially at least as tall as the scraper lips (8).

13. The oil scraper piston ring according to one of the preceding claims, wherein the outer flanks of the running webs (4) are steeper in relation to the run direction than the inner flanks.

14. The oil scraper piston ring according to one of the preceding claims, wherein the inner flank of the oil-chamber-side running web (4) is steeper in relation to the run direction than the inner flank of the combustion-chamber-side running web (4).

15. A piston for an internal combustion engine, comprising at least one oil scraper piston ring according to one of claims 1 to 14.

## Revendications

1. Segment de piston racleur d'huile comprenant :
- un corps de segment (2) ;
- deux arêtes de déplacement radialement extérieures (4) sur le corps de segment (2) qui sont disposées l'une derrière l'autre dans le sens de la course du piston et espacées l'une de l'autre par une cavité (6) extérieure ;
- chaque arête de déplacement (4) comportant respectivement deux lèvres de raclage (8) ; et
**caractérisé par**
- un revêtement anti-usure (10) sur chaque lèvre de raclage (8).

2. Segment de piston racleur d'huile selon la revendication 1, pour lequel toutes les lèvres de raclage (8) présentent pour l'essentiel la même hauteur radiale.

3. Segment de piston racleur d'huile selon la revendication 1, pour lequel la lèvre de raclage (8) du côté de la chambre de combustion d'au moins une arête de déplacement (4) comporte une hauteur radiale plus grande que la lèvre de raclage (8) du côté de la chambre d'huile de l'arête de déplacement (4).

4. Segment de piston racleur d'huile selon la revendication 3, pour lequel au moins une lèvre de raclage (8) radialement plus haute est la lèvre de raclage (8) du côté de la chambre de combustion de l'arête de déplacement (4).

5. Segment de piston racleur d'huile selon la revendication 3 ou 4, pour lequel la lèvre de raclage (8) du côté de la chambre de combustion de chaque arête de déplacement (4) comporte une hauteur radiale plus grande celle de la lèvre de raclage (8) du côté de la chambre d'huile de l'arête de déplacement (4).

6. Segment de piston racleur d' huile selon l'une quelconque des revendications 3 à 5, pour lequel la différence de hauteur radiale correspond pour l'essentiel à l'épaisseur de revêtement des lèvres de raclage (8).

7. Segment de piston racleur d'huile selon l'une quelconque des revendications précédentes, pour lequel le revêtement anti-usure (10) des lèvres de raclage (8) passe de façon ininterrompue dans la zone située entre les lèvres de raclage (8).

8. Segment de piston racleur d'huile selon l'une quelconque des revendications précédentes, pour lequel les lèvres de raclage (8) se rétrécissent radialement vers l'extérieur.

9. Segment de piston racleur d'huile selon la revendication 8, pour lequel le flanc du côté de la chambre de combustion de chaque lèvre de raclage (8) est, dans le sens de déplacement, à pente plus forte que le flanc du côté de la chambre d'huile.

10. Segment de piston racleur d'huile selon la revendication 8, pour lequel le flanc opposé à la chambre de combustion de la lèvre de raclage (8) du côté de la chambre de combustion d'une arête de déplacement (4) est à pente plus forte dans le sens de fonctionnement que le flanc du côté chambre d'huile de la lèvre de raclage (8) du côté de la chambre d'huile de l'arête de déplacement (4).

11. Segment de piston racleur d'huile selon l'une quelconque des revendications précédentes, pour lequel la cavité extérieure (6) entre les arêtes de déplacement (4) est plus profonde que la zone entre les lèvres de raclage (8).

12. Segment de piston racleur d'huile selon l'une quelconque des revendications précédentes, pour lequel revêtement anti-usure (10) entre les lèvres de raclage (8) est radialement au moins aussi haut que les lèvres de raclage (8).

13. Segment de piston racleur d'huile selon l'une quelconque des revendications précédentes, pour lequel les flancs extérieurs des arêtes de déplacement (4) sont, dans le sens de fonctionnement, à pente plus forte que les flancs intérieurs.

14. Segment de piston racleur d'huile selon l'une quelconque des revendications précédentes, pour lequel le flanc intérieur de l'arête de déplacement (4) du côté de la chambre d'huile est, dans le sens de déplacement, à pente plus forte que le flanc intérieur de l'arête de déplacement (4) du côté de la chambre de combustion.

15. Piston pour un moteur à combustion interne comprenant un segment de piston racleur d'huile selon l'une quelconque des revendications 1 à 14.
